(19) **Europäisches Patentamt**

**European Patent Office**

**Office européen des brevets**

(11) Publication number: **0 007 304**
**B1**

(12) **EUROPEAN PATENT SPECIFICATION**

(45) Date of publication of patent specification: **14.03.84**

(51) Int. Cl.³: **C 08 J 3/22, C 08 L 67/08**

(21) Application number: **79900043.5**

(22) Date of filing: **18.12.78**

(86) International application number:
**PCT/SE78/00095**

(87) International publication number:
**WO 79/00406 12.07.79 Gazette 79/14**

(54) **MASTER BATCH TO BE ADDED TO A THERMOPLASTIC RESIN.**

(30) Priority: **19.12.77 SE 7714395**

(43) Date of publication of application:
**23.01.80 Bulletin 80/2**

(45) Publication of the grant of the patent:
**14.03.84 Bulletin 84/11**

(84) Designated Contracting States:
**CH DE FR GB SE**

(56) References cited:
**DE - A - 1 210 556**
**DE - A - 2 306 698**
**DE - A - 2 435 819**
**DE - A - 2 651 444**
**DE - A - 2 725 133**
**GB - A - 209 094**
**GB - A - 240 852**
**GB - A - 907 115**
**GB - A - 1 377 519**
**SE - B - 181 527**
**SE - B - 383 528**
**SE - B - 388 870**

(73) Proprietor: **MASTER PLAST AB**
**Karbingatan 32**
**S-252 55 Helsingborg (SE)**

(72) Inventor: **Akesson, Tore Jan Börje**
**Drottninggatan 72A**
**S-252 21 Helsingborg (SE)**
Inventor: **Rosen, Klas Ake**
**Bangsbo Gard Pl 4522**
**S-211 36 Malmö (SE)**

(74) Representative: **Ström, Tore et al,**
**c/o Ström & Gulliksson AB Rundelsgatan 14**
**S-211 36 Malmö (SE)**

(56) References cited:
**US - A - 2 047 797**
**US - A - 2 987 496**
**US - A - 3 632 846**
**US - A - 3 783 134**
**US - A - 4 012 358**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

### Master batch to be added to a thermoplastic resin

The present invention relates to a master batch to be added to a thermoplastic resin, including additive particles dispersed in a vehicle.

Regarding such a master batch supplied in pelleted or granulated form, the requirement is that the master batch has a granular size which is commensurate with the granular size of the thermoplastic resin (basic raw material) which the master batch is to be mixed with.

The reason for the requirement of the same granular size as that of the basic raw material is i.a. that granules of smaller size than the granules of the basic raw material fall through in the material magazine of the machine wherein the material is being used such as an injection moulding machine or an extruder and thus provide a higher concentration of the additive in the lower portion of the magazine than in the upper portion thereof. The material falling through in this way is due to movements of the material in the magazine during the supply thereof to the plasticizing unit of the machine as well as occurring shaking and vibration of the machine.

Another requirement regarding the master batch is that it should be possible to use it not only together with basic raw materials of an arbitrary granular size but also together with different types of thermoplastic resin. The master batches made to-day are intended for a specific type of thermoplastic resin the adjustment of the mater batch to different types of thermoplastic resin being made by using different types of vehicles in the master batch. It is common that the thermoplastic resin used as vehicle in the master batch is the same as that which the master batch is to be mixed with. Thus, if a product is to be made of PVC this material is also used as vehicle in the master batch, and if the product is to be made of polystyrene or polyolefine the vehicle used is polystyrene and polyolefine, respectively, and so on. Accordingly, a big selection of master batches is required in order to cover the different needs that may arise in the production of thermoplastic resin products, i.e. one type of master batch for each type of thermoplastic resin, and considering the fact that there is a choice of several different thermoplastic resins when manufacturing products of different types, this means that the plastic manufacturers have to keep a stock of different types of master batch the number of which is the same as the number of thermoplastic resins used. Confusion may easily occur and may be fatal because a master batch having a vehicle of a specific thermoplastic resin cannot be mixed with other thermoplastic resins.

The invention relates particularly to a master batch in the form of a toner including colour pigment particles as an additive said particles being dispersed in the vehicle. Other examples of additives or fillers which can be included into the master batch are UV stabilizers, lubricants, organic peroxides, plasticizers, heat stabilizers and flame-resistant agents. Particularly, as far as additives are concerned, which are of the type having two or more components, such as foaming agents, it may be important that at least one of the components is supplied and added as a master batch. Several additives can appear in one and the same master batch, e.g. colour pigments in combination with other fillers.

Master batches in the form of a toner are manufactured in such a way that there is added to the vehicle which thus has been chosen with regard to the intended use of the toner, between 20 and 50 per cent by weight colour pigment particles together with certain lubricants. This mixture is plasticized in an extruder and is pelleted or granulated to a toner (master batch) intended especially for the thermoplastic resin included in the toner. The toner thus produced is then used for colouring the thermoplastic resin used as a basic raw material in the plastic product factory where the final product is being manufactured the toner being added in an amount of 1 or 2 per cent in order to obtain the desired colour shade of the final plastic product.

It should be mentioned here that besides the colouring of the basic raw material by the use of a toner including colour pigment particles dispersed in a vehicle the so-called dry colouring exists which implies that colour pigment particles are added in the plastic product factory directly to the thermoplastic resin used as basic raw material, by means of a mixer so that the comminuted colour pigment adheres to the granulated plastic resin. However, this method is objectionable from an environment point of view because the colour pigment creates an unhealthy dust emission. A supply of the colour pigment to the basic raw material, which is completely free from dust, therefore is aimed at to-day and in this respect the use of a toner of the type referred to herein has proved to be preferable.

As would be clear from the discussion above there is, however, a need for a master batch, e.g. a dust-free toner, which can be used universally for different types of thermoplastic resin so that the many different types of qualities which exist now can be reduced to a single type and quality. The requirements that have to be set regarding the vehicle of such a master batch that can be used universally as an additive to thermoplastic resins are primarily as follows:

1. The vehicle should be able to absorb additive particles up to 50—70 per cent of its own weight.

2. The vehicle should have a plasticization temperature below the plasticization temperature of the thermoplastic resin used as basic raw material, and latest at a temperature of the plasticization temperature of the basic raw material it should have a lower viscosity than the basic raw material.

3. The vehicle should be able to supply the additive to the basic raw material and should be able to be dispersed therein without appreciable effect on the physical or chemical properties of the final product.

4. The vehicle should have a coherent structure in cold condition so that the product can be pelleted or granulated to the same size as the basic raw material.

5. The vehicle, moreover, should have a lubricating or stabilizing effect.

According to the invention, there is provided a master batch for the addition of an additive to an arbitrary thermoplastic resin, comprising additive particles dispersed in a vehicle which provides the five properties listed above, wherein the vehicle comprises an alkyd free from oil and modified by esterification with resin material, including more than 95 per cent by weight of free resin acids, said alkyd having a minimum plasticization temperature of 90°C as measured according to the ball-and-ring method, and further includes ethylene vinyl acetate co-polymer, the master batch having a granular size substantially commensurate with that of the thermoplastic resin to which the master batch is to be added.

The invention will be described in more detail below with reference to illustrative examples.

Example

In a toner according to the invention in case If light and snow-white colour shades where Nyomer cannot be used the resin-modified alkyd which is marketed by Bergviks Hartsprodukter AB under the trademark Berigid 100 is a suitable vehicle. This resin-modified alkyd is produced by the method described in the Swedish patent specification 356,060 and although it has been developed primarily to be mixed with polyvinyl chloride material it has been found that it is suitable also for addition to entirely different plastics materials such as polystyrene and polyethylene.

For example a white pigment can have the following composition when Berigid 100 is used:

| White colour pigment, $TiO_2$ | 30% |
|---|---|
| Berigid 100 | 35% |
| Tall oil | 10% |
| EVA | 20% |
| Stearic acid | 2.5% |
| Calcium stearate | 2.5% |

The stearic acid prevents the thermoplastic resin from adhering in the machine in which it is worked. The stearate which can be e.g. calcium, zinc or aluminium stearate improves internal and external lubrication of the thermoplastic resin.

The production of the toner by applying this recipe can be performed in the same manner as described above in connection with the use of Nyomer.

Berigid 100 per se has a plasticization temperature of about 110°C and can be modified as stated below in order to obtain different plasticization temperatures:

For plasticization temperature 71°C

| Berigid 100 | 70% |
|---|---|
| Tall resin | 20% |
| Tall oil | 10% |

For plasticization temperature 67°C

| Berigid 100 | 67.5% |
|---|---|
| Tall resin | 20% |
| Tall oil | 12.5% |

For plasticization temperature 62°C

| Berigid 100 | 65% |
|---|---|
| Tall resin | 20% |
| Tall oil | 15% |

To the mixtures listed above there can be added colour pigment particles in a concentration which is more than 50 per cent. If required, also some wax can be added.

Berigid 100 can also be modified in order to change the plasticization temperature thereof by adding ethylene vinyl acetate (EVA) co-polymer. For example EVA can be obtained from Du Pont de Nemours under the trademark Elwax in different variants which influence the plasticization temperature in different ways. For example the following modifications of Berigid 100 can be obtained:

For plasticization temperature 80°C

| Berigid 100 | 70% |
|---|---|
| Elwax 220 | 30% |

For plasticization temperature 110°C

| Berigid 100 | 70% |
|---|---|
| Elwax 150 | 30% |

For plasticization temperature 130°C

| Berigid 100 | 70% |
|---|---|
| Elwax 240 | 30% |

In these modifications the change of the plasticization temperature obtained is dependent on the ratio between ethyl and vinyl in the ethylene vinyl acetate co-polymer (Elwax).

The aromatic resin marketed by AB Nynäs-Petroleum under the registered trademark Nyomer, which is manufactured by the method described in the Swedish patent specification 7406252-2 and the addition thereof 7512352-1, has such properties that it can be mixed with Berigid 100 as far as specific color shades are concerned. Nyomer is an aromatic resin which is produced of an oxidized mineral oil distillate and/or an oxidized solvent extract of mineral oil distillate including aromatically bound carbon, the content of the aromatic compound corresponding to a minimum value of the viscosity gravity constant according to ASTM D 2140 of 0.85 and having an average molecular weight of 150 to 600. To a toner of the invention based on Berigid 100, Nyomer thus can be added in order to obtain a darker color shade.

The modified mixtures with Berigid 100, mentioned above also lower the plasticization temperature of Nyomer in case it is included in the toner, the property of Nyomer acting as a universal vehicle being maintained.

By the master batch according to the invention the following advantages are obtained:

1. The master batch can be used universally in known thermoplastic resins.
2. By the addition of the master batch the surface finish of the final product is improved because the surface will be smooth and brilliant due to the fact that the thermoplastic resin flows more easily. The surface obtained is well suited for heat embossing and screen printing.
3. By the addition of the master batch the strength and other physical properties of the final product are improved due to an improved mixing and gelation of the thermoplastic resin.
4. The master batch has a rheology-improving effect, i.e. it facilitates processing.
5. The vehicle is non-toxic because it does not contain heavy metals or other constituents which are known to be toxic.
6. The water absorption of the final product is reduced, which in turn involves an improved cold resistance.
7. The final product has improved shape permanence.
8. The final product has improved durability due to reduced outward migration of additive and thereby is better suited for contact with food-stuffs and less dangerous for those who work with the product every day (some additives can be toxic per se).
9. A product which has been coloured with a toner in the form of a master batch according to the invention does not give its colour off.
10. The master batch can be used in regenerating plastics scrap in order to improve the properties of the generate by having a positive influence on the reconstruction of the polymer or the polymers of the plastics scrap, probably by initiating a polymerization or in similar ways.

The master batch according to the invention can include any additive for the addition of these additives to a thermoplastic resin, but the invention primarily has been developed for master batch in the form of a toner wherein the additive comprises solely a colour pigment or a colour pigment combined with other additives for influence on the properties of the thermoplastic resin.

## Claims

1. Universal granulated master batch to be dispersed in an arbitrary thermoplastic resin for the addition of an additive to the thermoplastic resin, comprising additive particles dispersed in a vehicle, characterized in that the vehicle includes an alkyd free from oil, which has been modified by esterification with resin material including more than 95 per cent by weight of free resin acids, and which has a minimum plasticization temperature of 90°C as measured according to the ball-and-ring method, and further includes ethylene vinyl acetate copolymer, the master batch having a granular size which is substantially commensurate with the granular size of the thermoplastic resin to which the master batch is to be added.

2. Master batch according to claim 1, characterized in that it has the form of a dust-free toner including colour pigment particles as the additive, for colouring the thermoplastic resin.

## Patentansprüche

1. Universelles granuliertes Masterbatch für die Dispergierung in einem beliebigen thermoplastischen Harz zum Zwecke der Zugabe eines Additivs zu dem thermoplastischen Harz, das Additivteilchen, die in einem Träger dispergiert sind, aufweist, dadurch gekennzeichnet, daß der Träger ein ölfreies Alkyd enthält, das durch Veresterung mit einem Harzmaterial, das mehr als 95 Gew.-% freie Harzsäuren enthält, modifiziert wurde, und das eine Mindest-Plastifiziertemperatur von 90°C, gemessen nach dem Ringkugel-Verfahren, aufweist, und er außerdem ein Ethylen-Vinylacetat-Copolymeres enthält, wobei das Masterbatch eine Korngröße aufweist, die im wesentlichen mit der Korngröße des thermoplastischen Harzes vergleichbar ist, dem das Masterbatch zugesetzt werden soll.

2. Masterbatch nach Anspruch 1, dadurch gekennzeichnet, daß es die Form eines staubfreien Toners aufweist, der Farbpigmentteilchen als Additiv enthält, um das thermoplastische Harz anzufärben.

## Revendications

1. Fournée principale universelle granulée à disperser dans une résine thermoplastique arbitraire pour l'addition d'un additif à la résine thermoplastique, comprenant des particules d'additif dispersées dans un véhicule, caractérisée en ce que le véhicule comprend un produit alkyde exempt d'huile, qui a été modifié par estérification avec une matière résineuse comprenant plus de 95% en poids d'acides résiniques libres, et qui a une température de plastification minima de 90°C, comme mesurée selon le procéé à la bille et à l'anneau, et comprend en outre un copolymère éthylène-acétate de vinyle, la fournée principale ayant une dimension de granulés qui est sensiblement en accord avec la dimension de granulés de la résine thermoplastique à laquelle la fournée principale doit être ajoutée.

2. Fournée principale selon la revendication 1, caractérisée en ce qu'elle a la forme d'un agent de marquage exempt de poussière comprenant des particules de pigment colorées, en tant qu'additif, pour colorer la résine thermoplastique.